# EUROPÄISCHE PATENTANMELDUNG

(11) **EP 2 295 691 A1**
(43) Veröffentlichungstag der Anmeldung: **16.03.2011**
(21) Anmeldenummer: 09010581.8
(22) Anmeldetag: 18.08.2009
(51) Int. Cl.: E05C 19/14

(54) **Hebelverschluss besonders zur Verbindung der Bordwände einer Ladepritsche**

(71) Anmelder: Steelpress Sp. z.o.o. (GmbH), 60-143 Poznan (PL)
(72) Erfinder: Domachowski, Andrzej, 61-462 Poznan (PL)
(74) Vertreter: Cieszkowski, Antoni

(57) **Zusammenfassung**

Gegenstand dieser Erfindung ist ein Hebelverschluss, besonders zur Verbindung der Bordwände einer Ladepritsche, vor allem bei Transportfahrzeugen und -anhängern.

Der Hebelverschluss gemäß Erfindung ist mit einem festen Körper **(1)** ausgestattet, der grundsätzlich einen flachen Untersatz **(2)** und zwei seitliche, senkrechte zu ihm Wände **(3),** mit gegenüberliegend angeordneten Löchern **(4)** hat. Der Untersatz **(2)** des Körpers **(1)** ist an einem der zu verbindenden Elemente in Form einer schwenkbaren Bordwand **(6)** befestigt, die ein Teil der nicht auf der Zeichnung darstellten Ladepritsche ist. Auf der anderen, quer angebrachten Bordwand **(7)** der Ladepritsche befindet sich der Festhalter **(8).** Der Hebelverschluss hat einen schwenkbaren Verschlusshebel **(9),** der gelenkig mit dessen Körper **(1)** verbunden ist. An den Verschlusshebel **(9)** ist die schwenkbare die Klammer **(10)** angeschlossen, die mit ihr gelenkig mittels Bolzen **(11)** bzw. Drehachse **(13a)** verbunden ist und sich mit dem Festhalter **(8)** verzahnt. Die Löcher **(4)** in den seitlichen Wänden **(3)** des Körpers **(1)** haben Längsprofile **(12),** die annähernd parallel zu seinem Untersatz **(2)** verlaufen. In den länglichen Löchern **(4)** befindet sich der frei angebrachte Bolzen, der im vorderen Teil des Verschlusshebels **(9)** befestigt ist und der dessen Drehachse **(13)** bildet. Bei einer anderen Lösung des Hebelverschlusses haben die seitlichen Wände **(3a)** des Verschlusshebels **(9)** längliche Löcher **(4a),** in denen die Drehachse **(13a)** der Klammer **(10)** angebracht ist. Dank dieser Lösung sind der Verschlusshebel **(9)** und dessen Drehachse **(13)** bzw. die Klammer **(10)** und deren Drehachse **(13a),** unter der Einwirkung eines elastischen Elements in Form einer Zug- bzw. Druck-Schraubenfeder **(14, 14a),** entlang der Löcher **(4, 4a)** verstellbar.

## Beschreibung

Gegenstand der Erfindung ist ein Hebelverschluss, besonders zur Verbindung der Bordwände einer Ladepritsche, vor allem bei Transportfahrzeugen und -anhängern.

Von der Patentschrift Nr. PL 183493 ist ein Hebelverschluss für die Befestigung von Geräten, besonders elektronischen, auf beweglichem Traguntersatz, bekannt. Dieser bekannte Hebelverschluss hat einen Körper mit zwei seitlichen Wänden und einem flachen Untersatz, der an einem der zu verbindenden Elemente befestigt ist. Die seitlichen Wände des Körpers haben zwei Rundlöcher, in denen ein Bolzen eingesetzt ist, der die Drehachse des schwenkbaren Verschlusshebels bildet. Der Verschlusshebel ist wiederum gelenkig mit einer schwenkbaren Klammer verbunden, deren Drehachse der in diesem Hebel eingesetzte Bolzen bildet. Die Klammer hat zwei parallele Arme und einen Querbolzen, der im geschlossenen Zustand des Hebelverschlusses mit dem zweiten der zu verbindenden Elemente, mit einem Sperrhaken verzahnt ist. Jeder Arm der Klammer besteht aus zwei parallelen Schiebern, die von einer Druckfeder umgeben sind. Durch die Anwendung der Federn liegt der Klammer-Querbolzen am Sperrhaken mit konstanter Druckkraft an, da sich die Arme der Klammer selbsttätig kürzen bzw. verlängern können. Der bekannte Hebelverschluss ermöglicht zwar die gegenseitige Verbindung der Elemente mit gleichmäßiger Kraft, hat jedoch eine ziemlich komplizierte Konstruktion und bei großen Belastungen des Hebelverschlusses können die zweiteiligen Arme seiner Klammer eine zu kleine Steifigkeit sowie eine ungenügende mechanische Festigkeit aufweisen.

Der Hebelverschluss, besonders zur Verbindung der Bordwände einer Ladepritsche, ausgestattet mit einem Körper, befestigt mit seinem grundsätzlich flachen Untersatz an einem der zu verbindenden Elemente und ausgestattet mit seitlichen Wänden mit Löchern, in denen die Drehachse des schwenkbaren Verschlusshebels angebracht ist, gelenkig verbunden mit der schwenkbaren Klammer, wobei die Klammer sich mit dem Festhalter verzahnt, der am zweiten der zu verbindenden Elemente befestigt ist, kennzeichnet sich gemäß der Erfindung dadurch aus, dass die Löcher der seitlichen Wände des Körpers Längsprofile haben, die annähernd parallel zu seinem Unteratz verlaufen und der Verschlusshebel sowie seine Drehachse entlang diesen Löchern, unter der Einwirkung des elastischen Elements, verstellbar sind. In der vorteilhaften Lösung des Hebelverschlusses gemäß der Erfindung hat das elastische Element die Form einer Zug-Schraubenfeder, derer vorderes Ende an der Drehachse des Verschlusshebels befestigt ist und das hintere Ende ist am Vorsprung befestigt, der im hinteren Teil des Untersatzes des Körpers gebildet ist. Bei ähnlicher Lösung des Hebelverschlusses hat das elastische Element die Form einer Zug-Schraubenfeder, deren vorderes Ende auch an der Drehachse des Verschlusshebels eingehakt und das hintere Ende am Bolzen eingehakt ist, der quer zwischen den seitlichen Wänden des hinteren Körperteils eingesetzt ist. Eine andere, mit der Erfindung übereinstimmende Lösung des Verschlusses beruht darauf, dass sein elastisches Element die Form einer Druck-Schraubenfeder hat, deren vorderes Ende am Vorsprung gestützt ist, gebildet im vorderen Teil des Untersatzes des Körpers und das hintere Ende an der Drehachse des Verschlusshebels gestützt ist. Am hinteren Ende der Druck-Schraubenfeder ist eine Auflage mit stirnseitiger, bogenartiger Aussparung angebracht, die an der Drehachse des Verschlusshebels anliegt. Eine angenäherte Lösung des Hebelverschlusses beruht darauf, dass sein elastisches Element die Form einer Druck-Schraubenfeder hat, deren vorderes Ende auf dem quer zwischen den seitlichen Wänden des vorderen Körperteils eingesetzten Bolzen und das hintere Ende an der Drehachse des Verschlusshebels gestützt ist. An beiden Enden der Druck-Schraubenfeder sind Auflagen mit stirnseitigen, bogenartigen Aussparungen angebracht, die am quer gelegenen Bolzen des Körpers sowie an der Drehachse des Verschlusshebels anliegen. Eine andere Lösung des Hebelverschlusses gemäß der Erfindung charakterisiert sich dadurch, dass der Verschlusshebel in den seitlichen Wänden Löcher mit Längsprofilen hat, die annähernd parallel zum Untersatz des Körpers verlaufen. In diesen Längsprofil-Löchern ist die Drehachse der Klammer untergebracht, wobei die Klammer sowie deren Drehachse, unter der Einwirkung des elastischen Druckelements, entlang der Löcher verstellbar sind. In der vorteilhaften Lösung des Hebelverschlusses hat sein elastisches Druckelement die Form einer Schraubenfeder, deren vorderes Ende an der Drehachse des Hebelverschlusses und das hintere Ende an der Drehachse der Klammer abgestützt sind. Die Schraubenfeder umgibt den Bolzen, der radial aus der Drehachse des Hebelverschlusses herausragt und dessen freies Ende ist verschiebbar untergebracht im Loch, gebildet in der Drehachse der Klammer. In einer angenäherten Lösung umgibt die Schraubenfeder den Bolzen, der radial aus der Drehachse der Klammer herausragt und dessen freies Ende ist verschiebbar untergebracht im Loch, gebildet in der Drehachse des Verschlusshebels. In einer anderen, vorteilhaften Lösung des Hebelverschlusses hat sein elastisches Druckelement auch die Form einer Schraubenfeder, deren vorderes Ende an der stirnseitigen, nach unten gekröpften Wand des Verschlusshebels gestützt ist und das hintere Ende ist an der Drehachse der Klammer gestützt. Eine Schraubenfeder umgibt den Bolzen, der senkrecht aus der stirnseitigen Wand des Verschlusshebels herausragt und dessen freies Ende ist verschiebbar im Loch untergebracht, das in der Drehachse der Klammer gebildet ist. In einer angenäherten Lösung umgibt eine Schraubenfeder den Bolzen, der aus der Drehachse der Klammer radial herausragt und dessen freies Ende ist verschiebbar im Loch untergebracht, das in der stirnseitigen Wand des Verschlusshebels gebildet ist. Dank der Anwendung des Verschlusshebels bzw. der Klammer mit verstellbaren Drehachsen zeichnet sich der Hebelverschluss gemäß der Erfindung durch einfache Konstruktion aus und ist für die Übertragung großer mechanischer Belastungen angepasst.

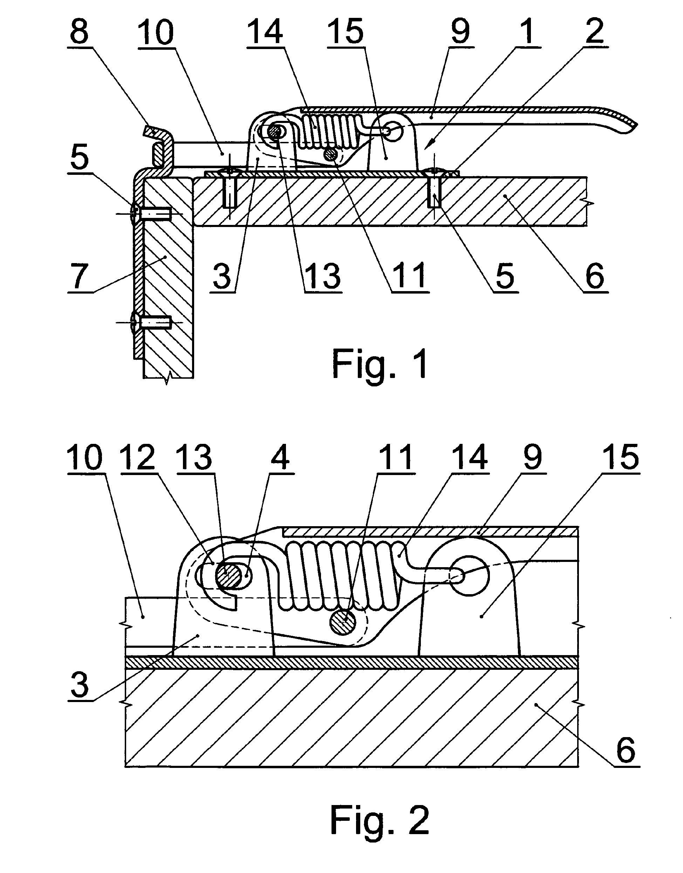

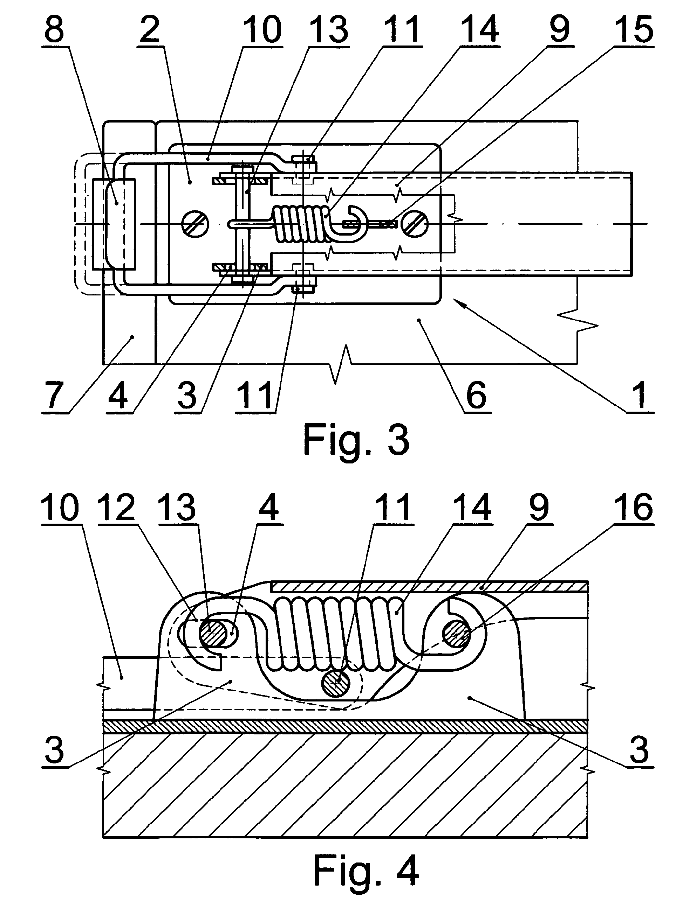

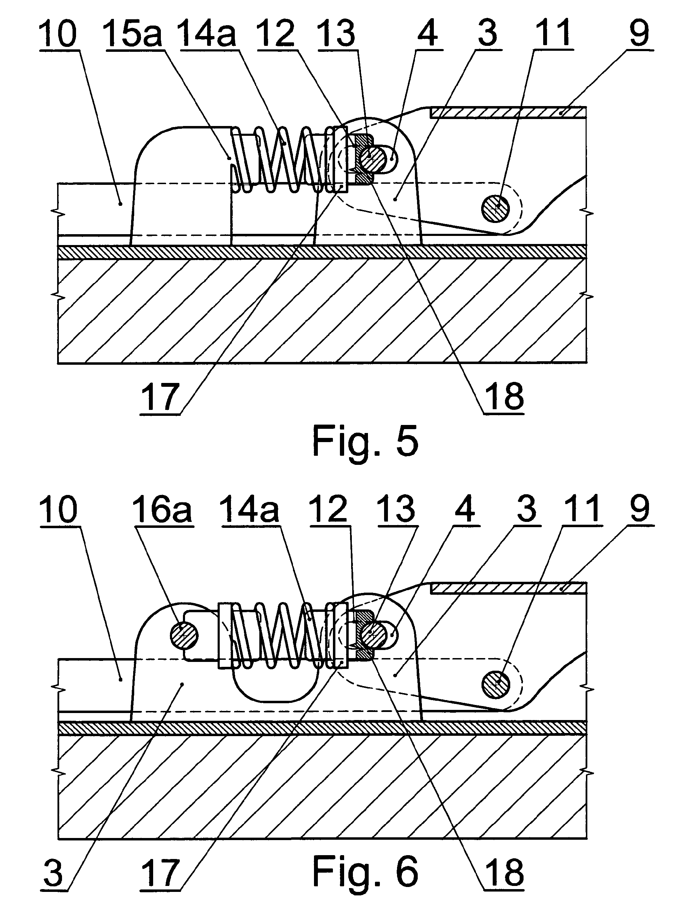

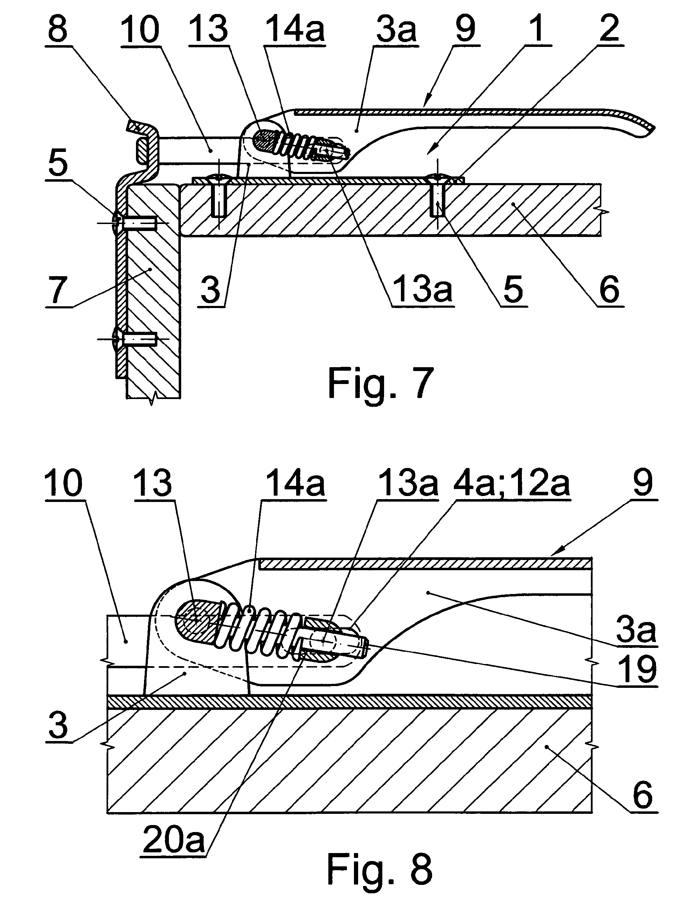

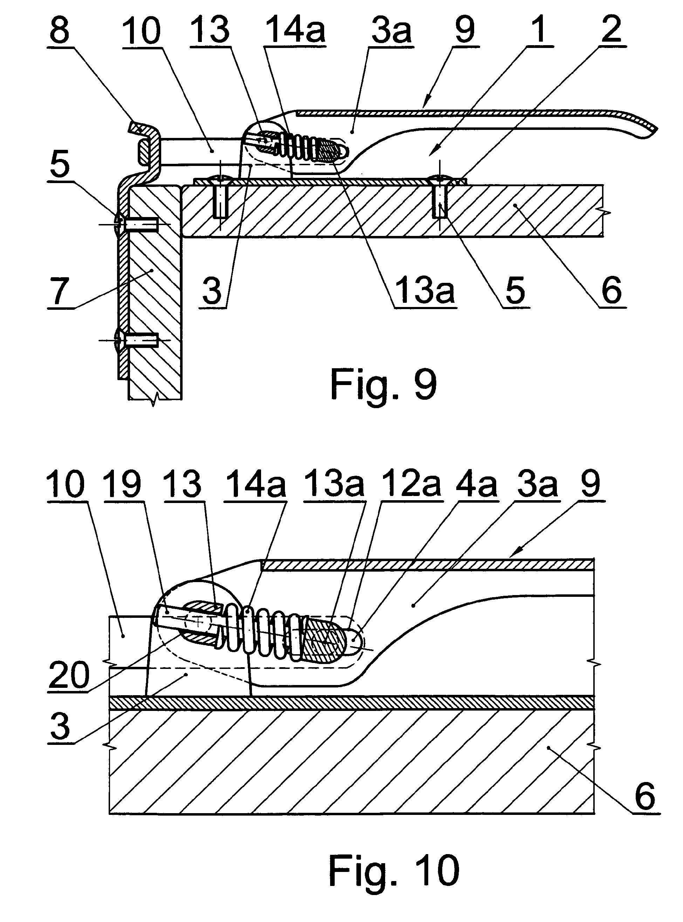

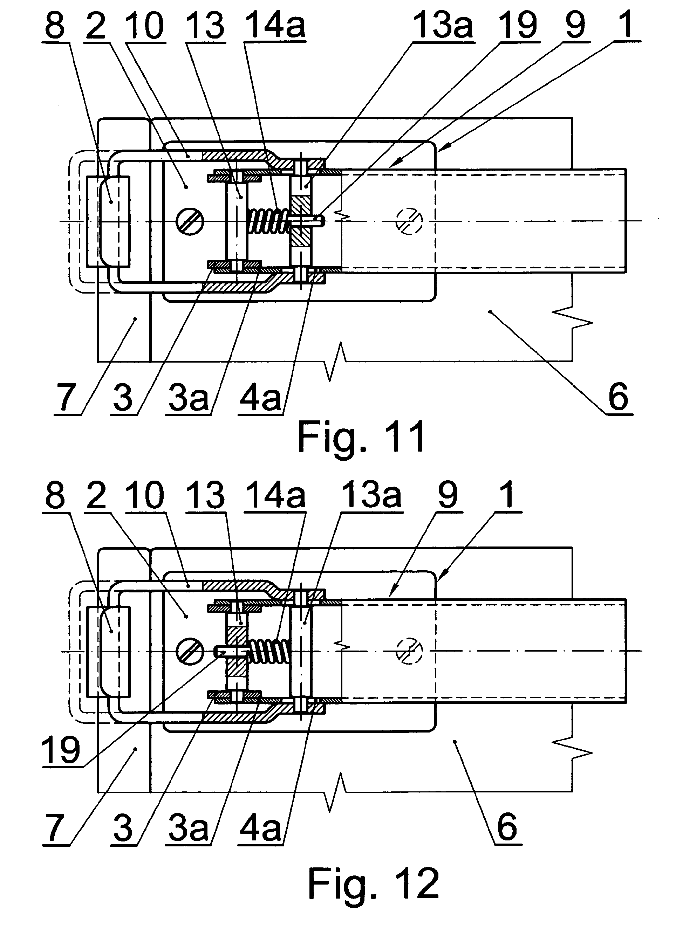

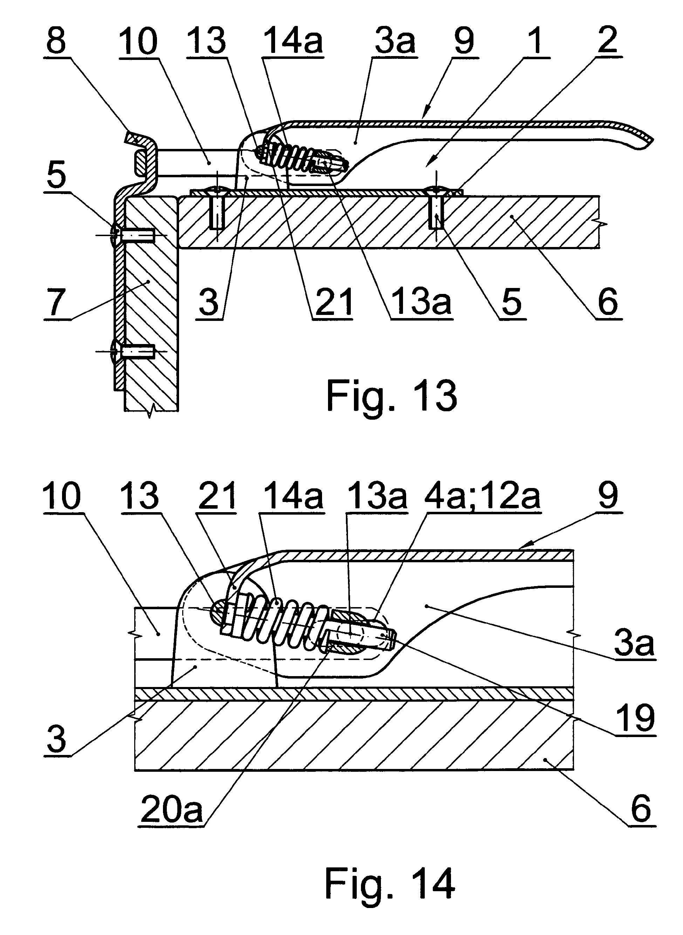

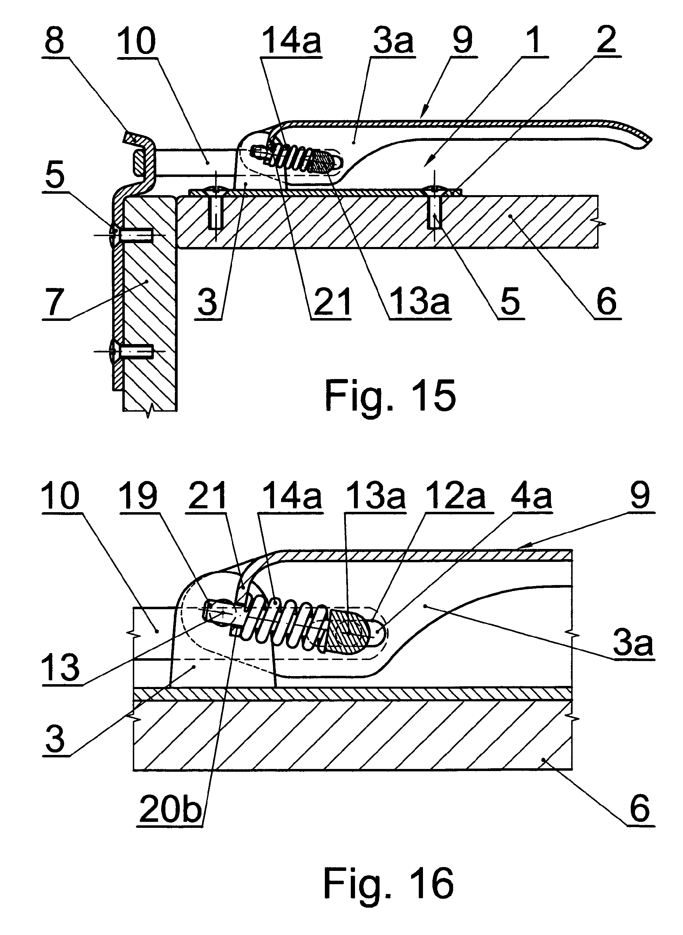

Der Gegenstand der Erfindung ist als Ausführungsbeispiel auf der Zeichnung dargestellt, auf der die nacheinander folgenden Figuren folgendes darstellen: Fig. 1 - Längsschnitt des Hebelverschlusses mit verstellbarer Drehachse des Verschlusshebels, Fig. 2 - vergrößerter Längsschnitt eines Fragments des Hebelverschlusses gemäß Fig. 1, Fig. 3 - Hebelverschluss gemäß Fig. 1 in Draufsicht, Fig. 4 - vergrößerter Längsschnitt eines Fragments des Hebelverschlusses mit Zug-Schraubenfeder und deren Bolzen, Fig. 5 - vergrößerter Längsschnitt eines Fragments des Hebelverschlusses mit Druck-Schraubenfeder, abgestützt am Vorsprung des Körpers, Fig. 6 - vergrößerter Längsschnitt eines Fragments des Hebelverschlusses mit Druck-Schraubenfeder, abgestützt am quer gelegenem Bolzen des Körpers, Fig. 7 - Längsschnitt des Hebelverschlusses mit verstellbarer Drehachse der Klammer und einem Bolzen der Schraubenfeder, der mit der Drehachse des Verschlusshebels verbunden ist, Fig. 8 - vergrößerter Längsschnitt eines Fragments des Hebelverschlusses gemäß Fig. 7, Fig. 9 - Längsschnitt des Hebelverschlusses mit dem Bolzen der Schraubenfeder, der mit der Drehachse der Klammer verbunden ist, Fig. 10 vergrößerter Längsschnitt eines Fragments des Hebelverschlusses gemäß Fig. 9, Fig. 11 - Hebelverschluss gemäß Fig. 7 und 8 in Draufsicht, Fig. 12 - Hebelverschluss gemäß Fig. 9 und 10 in Draufsicht, Fig. 13 - Längsschnitt des Hebelverschlusses mit dem Bolzen der Schraubenfeder, der mit stirnseitiger Wand des Verschlusshebels verbunden ist, Fig. 14 - vergrößerter Längsschnitt eines Fragments des Hebelverschlusses gemäß Fig. 13, Fig. 15 - Längsschnitt des Hebelverschlusses mit dem Bolzen der Schraubenfeder, der mit der Drehachse der Klammer verbunden ist und die Fig. 16 - vergrößerter Längsschnitt eines Fragments des Hebelverschlusses gemäß Fig. 15.

Der Hebelverschluss gemäß der Erfindung ist mit einem festen Körper **1** ausgestattet, der einen flachen Untersatz **2** und zwei seitliche, senkrechte zu ihm Wände **3,** mit gegenüberliegend angeordneten Löchern **4,** hat. Der Untersatz **2** des Körpers **1** ist mittels Schrauben **5** befestigt an ein der zu verbindenden Elemente in Form einer schwenkbaren Bordwand **6,** die ein Teil der auf der Zeichnung nicht darstellten Ladepritsche bildet. Auf der anderen, quer angebrachten Bordwand **7** der Ladepritsche befindet sich der Festhalter **8,** der auch an diese mittels Schrauben **5** befestigt ist. Der Hebelverschluss hat einen schwenkbaren Verschlusshebel **9,** der gelenkig mit seinem Körper **1** verbunden ist. An den Verschlusshebel **9** ist die schwenkbare Klammer **10** angeschlossen, die mit ihm gelenkig mittels Bolzen **11** verbunden ist. Im geschlossenen Zustand des Hebelverschlusses ist seine Klammer **10** mit dem Festhalter **8** verzahnt. Wie auf Fig. 1 - 6 dargestellt, haben die Löcher **4** in den seitlichen Wänden **3** des Körpers **1** Längsprofile **12,** die annähernd parallel zum Untersatz **2** sind. In den Löchern **4** befindet sich ein frei angebrachter Bolzen, der im vorderen Teil des Verschlusshebels **9** befestigt ist und seine Drehachse **13** bildet. Dank dieser Lösung sind der Verschlusshebel **9** und dessen Drehachse **13,** entlang der Löcher **4** der seitlichen Wände **3** des Körpers **1,** verstellbar. Die Drehachse **13** des Verschlusshebels **9** ist mit dem Körper **1** des Hebelverschlusses mittels eines elastischen Elements verbunden. Gemäß Fig. 1 - 4 hat das elastische Element die Form einer Zug-Schraubenfeder **14.** Wie dargestellt auf Fig. 1 - 3, ist das vordere Ende der Schraubenfeder **14** an der Drehachse **13** Verschlusshebels **9** und das hintere Ende ist am Vorsprung **15** eingehakt, der zentral aus dem hinteren Teil des Untersatzes **2** herausragt. In der gemäß Fig. 4 dargestellten Lösung hat das elastische Element auch die Form einer Zug- Schraubenfeder **14.** Deren vorderes Ende ist an der Drehachse **13** des Verschlusshebels **9** eingehakt und das hintere Ende ist am Bolzen **16** eingehakt, der im hinteren Teil des Körpers **1** eingesetzt und quer zwischen seinen seitlichen Wänden **3** angebracht ist. Wiederum stellt die Fig. 5 einen Hebelverschluss dar, dessen elastisches Element eine Druck-Schraubenfeder **14a** ist. Das vordere Ende der Druck-Schraubenfeder **14a** ist am Vorsprung **15a** abgestützt, der zentral aus dem vorderen Teil des Untersatzes **2** herausragt und das hintere Ende ist an der Drehachse **13** des Verschlusshebels **9** abgestützt. Am hinteren Ende der Druck-Schraubenfeder **14a** ist die Auflage **17** mit der stirnseitigen, bogenförmigen Aussparung **18** eingesetzt, die an der Drehachse **13** des Verschlusshebels **9** anliegt. Fig. 6 stellt einen Hebelverschluss dar, dessen elastisches Element auch eine Druck-Schraubenfeder **14a** ist. Deren vorderes Ende ist am Bolzen **16a** abgestützt, der quer zwischen seinen seitlichen Wänden **3** des vorderen Teils des Körpers **1** angebracht ist und das hintere Ende ist an der Drehachse **13** des Verschlusshebels **9** abgestützt. An beiden Enden der Druck-Schraubenfeder **14a** sind die Auflagen **17** mit den stirnseitigen, bogenförmigen Aussparungen **18** eingesetzt, die am quer gelegenen Bolzen **16a** des Körpers **1** und der Drehachse **13** des Verschlusshebels **9** anliegen. Bei der Lösung des Hebelverschlusses gemäß Fig. 7 - 16 hat der Verschlusshebel **9** seitliche Wände **3a** mit Löchern **4a** mit Längsprofil **12a,** die annähernd parallel zum Untersatz **2** des Körpers **1** verlaufen. In den Löchern **4a** ist die Drehachse **13a** der Klammer **10** untergebracht. Die Klammer **10** und deren Drehachse **13a** sind, unter der Einwirkung des elastischen Druckelements, entlang der Löcher **4a** verstellbar. Wie dargestellt auf Fig. 7 - 12, hat das elastische Element die Form einer Druck- Schraubenfeder **14a.** Deren vorderes Ende ist an der Drehachse **13** des Verschlusshebels **9** und das hintere Ende ist an der Drehachse **13a** der Klammer **10** abgestützt. Gemäß Fig. 7 und 8 umgibt die Schraubenfeder **14a** den Bolzen **19,** der radial aus der Drehachse **13** des Verschlusshebels **9** herausragt und dessen freies Ende ist verschiebbar w Loch **20a** angebracht, das in der Drehachse **13a** der Klammer **10** gebildet ist. In der angenäherten Lösung gemäß Fig. 9 und 10 umgibt die Schraubenfeder **14a** den Bolzen **19,** der radial aus der Drehachse **13a** der Klammer **10** herausragt und dessen freies Ende ist verschiebbar im Loch **20** angebracht, das in der Drehachse **13** des Verschlusshebels **9** gebildet ist. Bei der Lösung des Hebelverschlusses gemäß Fig. 13 - 16 hat sein elastisches Element auch die Form einer Druck-Schraubenfeder **14a.** Deren vorderes Ende ist an der nach unten gekröpften stirnseitigen Wand **21** des Verschlusshebels **9** und das hintere Ende ist an der Drehachse **13a** der Klammer **10** abgestützt. Gemäß Fig. 13 und 14 umgibt die Schraubenfeder **14a** den Bolzen **19,** der senkrecht aus der stirnseitigen Wand **21** des Verschlusshebels **9** herausragt und dessen freies Ende ist verschiebbar im Loch **20a** angebracht, das in der Drehachse **13a** der Klammer **10** gebildet ist. In der angenäherten Lösung gemäß Fig. 15 und 16 umgibt die Schraubenfeder **14a** den Bolzen **19,** der radial aus der Drehachse **13a** der Klammer **10** herausragt und dessen freies Ende verschiebbar im Loch **20b** untergebracht ist, gebildet in der stirnseitigen Wand **21** des Verschlusshebels **9.** Vor der Verbindung der gegenseitig angenäherten Bordwände **6, 7** ist der Verschlusshebel **9** des Hebelverschlusses von der Bordwand **6** abgeneigt und die Schraubenfeder **14** bzw. **14a** drückt die Drehachsen **13, 13a** an die hinteren Ränder der Löcher **4, 4a** in den seitlichen Wänden **3** des Körpers **1** bzw. in den seitlichen Wänden **3a** des Verschlusshebels **9.** Die Klammer **10** ist dann nach vorne geschoben und kann am Festhalter **8** eingehakt werden. In der Lösung des Hebelverschlusses gemäß Fig. 1 - 6 verschiebt sich während der Rückschwenkung des Verschlusshebels **9** seine Drehachse **13** allmählich gegen die vorderen Ränder der Löcher **4** und durch die Einwirkung der Feder **14** bzw. **14a** liegt die Klammer **10** immer stärker am Festhalter **8** an. Ähnlich ist es bei der Rückschwenkung des Verschlusshebels **9** im Hebelverschluss gemäß Fig. 7 - 16, wenn sich die Drehachse **13a** der Klammer **10** in Richtung der vorderen Ränder der Löcher **4a** verschiebt. Unter der Einwirkung der Schraubenfeder **14a,** liegt im Ergebnis die Klammer **10** immer stärker am Festhalter **8** an. Bei maximaler Rückschwenkung des Verschlusshebels **9** ist dessen Drehachse **13** mehr von der Fläche der Bordwand **6** entfernt, als die Bolzen **11** bzw. die Drehachse **13a** der Klammer **10.** Dadurch kann sich der Verschlusshebel **9** nicht selbsttätig ablenken und der Hebelverschluss ist in der Verschlussposition gesperrt. Die Möglichkeiten der Realisation der Erfindung beschränken sich nicht zum dargestellten Beispiel. Als elastisches Element des Hebelverschlusses kann auch eine Schlingfeder und sogar auch ein aus Elastomeren gebildetes Profilelement verwendet werden.

### Bezeichnungen

- 1 -: Körper
- 2 -: Untersatz
- 3 -: Wand
- 3a -: Wand
- 4 -: Loch
- 4a -: Loch
- 5 -: Schraube
- 6 -: Bordwand
- 7 -: Bordwand
- 8 -: Festhalter
- 9 -: Verschlusshebel
- 10 -: Klammer
- 11 -: Bolzen
- 12 -: Längsprofil
- 12a -: Längsprofil
- 13 -: Drehachse
- 13a -: Drehachse
- 14 -: Schraubenfeder
- 14a -: Schraubenfeder
- 15 -: Vorsprung
- 15a -: Vorsprung
- 16 -: Bolzen
- 16a -: Bolzen
- 17 -: Auflage
- 18 -: Aussparung
- 19 -: Bolzen
- 20 -: Loch
- 20a -: Loch
- 20b -: Loch
- 21 -: stirnseitige Wand

## Patentansprüche

1. Hebelverschluss, besonders zur Verbindung der Bordwände einer Ladepritsche, ausgestattet mit einem Körper, befestigt mit seinem grundsätzlich flachem Untersatz an einem der zu verbindenden Elemente und ausgestattet mit seitlichen Wänden mit Löchern, in denen die Drehachse des schwenkbaren Verschlusshebels angebracht ist, gelenkig verbunden mit der schwenkbaren Klammer, wobei die Klammer sich mit dem Festhalter verzahnt, der am zweiten der zu Elemente befestigt ist, ***dadurch gekennzeichnet,* dass** die Löcher **(4)** der seitlichen Wände **(3)** des Körpers **(1)** Längsprofile **(12)** haben, die annähernd parallel zu seinem Untersatz **(2)** verlaufen und der Verschlusshebel **(9)** sowie dessen Drehachse **(13)** unter der Einwirkung des elastischen Elements **(14, 14a),** entlang der Löcher **(4)** verstellbar sind.

2. Hebelverschluss gemäß Anspruch 1, ***dadurch gekennzeichnet,* dass** sein elastisches Element die Form einer Zug-Schraubenfeder **(14)** hat, deren vorderes Ende eingehakt ist an der Drehachse **(13)** des Verschlusshebels **(9)** und das hintere Ende eingehakt ist am Vorsprung **(15),** gebildet im hinteren Teil des Untersatzes **(2)** des Körpers **(1).**

3. Hebelverschluss gemäß Anspruch 1, ***dadurch gekennzeichnet,* dass** sein elastisches Element die Form einer Zug-Schraubenfeder **(14)** hat, deren vorderes Ende eingehakt ist an der Drehachse **(13)** des Verschlusshebels **(9)** und das hintere Ende eingehakt ist am Bolzen **(16),** der quer zwischen den seitlichen Wänden **(3)** des hinteren Teils des Körpers **(1)** eingesetzt ist.

4. Hebelverschluss gemäß Anspruch 1, ***dadurch gekennzeichnet,* dass** sein elastisches Element die Form einer Druck-Schraubenfeder **(14a)** hat, deren vorderes Ende am Vorsprung **(15a)** abgestützt ist, gebildet im vorderen Teil des Untersatzes **(2)** des Körpers **(1)** und das hintere Ende an der Drehachse **(13)** des Verschlusshebels **(9)** abgestützt ist.

5. Hebelverschluss gemäß Anspruch 4, ***dadurch gekennzeichnet,* dass** am hinteren Ende der Druck-Schraubenfeder **(14a)** eine Auflage **(17)** mit stirnseitiger, bogenförmiger Aussparung **(18)** eingesetzt ist, die an der Drehachse **(13)** des Verschlusshebels **(9)** anliegt.

6. Hebelverschluss gemäß Anspruch 1, ***dadurch gekennzeichnet,* dass** sein elastisches Element die Form einer Druck-Schraubenfeder **(14a)** hat, deren vorderes Ende am Bolzen **(16a)** abgestützt ist, der quer zwischen den seitlichen Wänden **(3)** des vorderen Teils des Körpers **(1)** eingesetzt ist und das hintere Ende an der Drehachse **(13)** des Verschlusshebels **(9)** abgestützt ist.

7. Hebelverschluss gemäß Anspruch 6, ***dadurch gekennzeichnet,* dass** an beiden Enden der Druck-Schraubenfeder **(14a)** Auflagen **(17)** mit stirnseitigen, bogenförmigen Aussparungen **(18)** eingesetzt sind, die am quer gelegenen Bolzen **(16a)** des Körpers **(1)** sowie an der Drehachse **(13)** des Verschlusshebels **(9)** anliegen.

8. Hebelverschluss, besonders zur Verbindung der Bordwände einer Ladepritsche, ausgestattet mit einem Körper, befestigt mit seinem grundsätzlich flachem Untersatz an einem der zu verbindenden Elemente und ausgestattet mit seitlichen Wänden, zwischen denen die Drehachse des schwenkbaren Verschlusshebels angebracht ist, gelenkig verbunden mit der schwenkbaren Klammer, wobei die Klammer sich mit dem Festhalter verzahnt, der am zweiten der zu verbindenden Elemente befestigt ist, ***dadurch gekennzeichnet,* dass** der Verschlusshebel **(9)** seitliche Wände **(3a)** mit Löchern **(4a)** mit Längsprofilen **(12a)** hat, die annähernd parallel zum Untersatz **(2)** des Körpers **(1)** verlaufen, in denen die Drehachse **(13a)** der Klammer **(10)** angebracht ist, wobei die Klammer **(10)** und deren Drehachse **(13a)** entlang der Löcher **(4a)** unter der Einwirkung der Druck-Schraubenfeder **(14a)** verstellbar sind.

9. Hebelverschluss gemäß Anspruch 8, ***dadurch gekennzeichnet,* dass** sein elastisches Druckelement die Form einer Druck-Schraubenfeder **(14a)** hat, deren vorderes Ende an der Drehachse **(13)** des Verschlusshebels **(9)** und das hintere Ende an der Drehachse **(13a)** der Klammer **(10)** abgestützt sind.

10. Hebelverschluss gemäß Anspruch 9, ***dadurch gekennzeichnet,* dass** die Schraubenfeder **(14a)** den Bolzen **(19)** umgibt, der radial aus der Drehachse **(13)** des Verschlusshebels **(9)** herausragt und dessen freies Ende ist verschiebbar angebracht im Loch **(20a),** gebildet in der Drehachse **(13a)** der Klammer **(10).**

11. Hebelverschluss gemäß Anspruch 9, ***dadurch gekennzeichnet,* dass** die Schraubenfeder **(14a)** den Bolzen **(19)** umgibt, der radial aus der Drehachse **(13a)** der Klammer **(10)** herausragt und dessen freies Ende ist verschiebbar angebracht im Loch **(20),** gebildet in der Drehachse **(13)** des Verschlusshebels **(9).**

12. Hebelverschluss gemäß Anspruch 8, ***dadurch gekennzeichnet,* dass** sein elastisches Druckelement die Form einer Schraubenfeder **(14a)** hat, deren vorderes Ende an der nach unten gekröpften stirnseitigen Wand **(21)** des Verschlusshebels **(9)** und das hintere Ende an der Drehachse **(13a)** der Klammer **(10)** abgestützt ist.

13. Hebelverschluss gemäß Anspruch 12, ***dadurch gekennzeichnet,* dass** die Schraubenfeder **(14a)** den Bolzen **(19)** umgibt, der senkrecht aus der stirnseitigen Wand **(21)** des Verschlusshebels **(9)** herausragt und dessen freies Ende ist verschiebbar angebracht im Loch **( 20a),** gebildet in der Drehachse **(13a)** der Klammer **(10).**

14. Hebelverschluss gemäß Anspruch 12, ***dadurch gekennzeichnet,* dass** die Schraubenfeder **(14a)** den Bolzen **(19)** umgibt, der radial aus der Drehachse **(13a)** der Klammer **(10)** herausragt und dessen freies Ende ist verschiebbar angebracht im Loch **(20b),** gebildet in der stirnseitigen Wand **(21)** des Verschlusshebels **(9).**
